# EUROPEAN PATENT APPLICATION

(11) **EP 0 597 204 A2**
(43) Date of publication of application: **18.05.1994**
(21) Application number: 93114145.1
(22) Date of filing: 03.09.1993
(51) Int. Cl.: H04L 29/06, H04Q 11/04, H04L 12/18

(54) **Distributed data processing system using B,D and H ISDN channels**

(30) Priority: 07.09.1992 JP 237909/92
(71) Applicant: FUJITSU LIMITED, Kawasaki-shi, Kanagawa 211 (JP)
(72) Inventor: Ryu, Tadamitsu, c/o FUJITSU LIMITED, Kawasaki-shi, Kanagawa 211 (JP); Ichikawa, Naomi, c/o FUJITSU LIMITED, Kawasaki-shi, Kanagawa 211 (JP); Tojima, Tetsuo, c/o FUJITSU NETWORK ENG. LTD., Kawasaki-shi, Kanagawa 213 (JP); Toyota, Masanobu, c/o FUJITSU NETW.ENGIN.LIMITED, Takatsu-ku,Kawasaki-shi, Kanagawa 213 (JP); Adachi, Takeshi, c/o FUJITSU NETWORK ENG. LTD., Kawasaki-shi, Kanagawa 213 (JP)
(74) Representative: Lehn, Werner, Dipl.-Ing.

(57) **Abstract**

A communications system includes a network (103), and terminal stations (101, 102) connected to the network, each of the terminal stations having a data processing function and a communications function. The network includes a first line (151), a second line (152), and a third line (153). Messages for controlling a communication between the terminal stations are transferred via the first line. Inquiry information is broadcasted, via the second line, from a first one of the terminal stations which does not have desired data. The inquiry information asks the terminal stations other than the first one of the terminal stations whether or not the terminal stations other than the first one of the terminal stations have the desired data. The desired data is transferred, via the third line, from a second one of the terminal stations which has the desired data to the first one of the terminal stations which needs the desired data. The third line has a bit rate higher than that of the first line.

## Description

### BACKGROUND OF THE INVENTION

### 1. Field of the Invention

The present invention generally relates to a distributed data processing system that performs data processing so that process subject data and/or a program is transferred via a switching network. More particularly, the present invention is concerned with a three-hierarchical layer communications processing system capable of performing, by means of a three-hierarchical layer communications network, a high-bit-rate transfer of process subject data and/or a program between terminal stations with a processing time for a normal disk access.

### 2. Description of the Prior Art

Conventionally, a plurality of terminals are connected together via a switching network, and a process is carried out by communicating with each other as necessary.

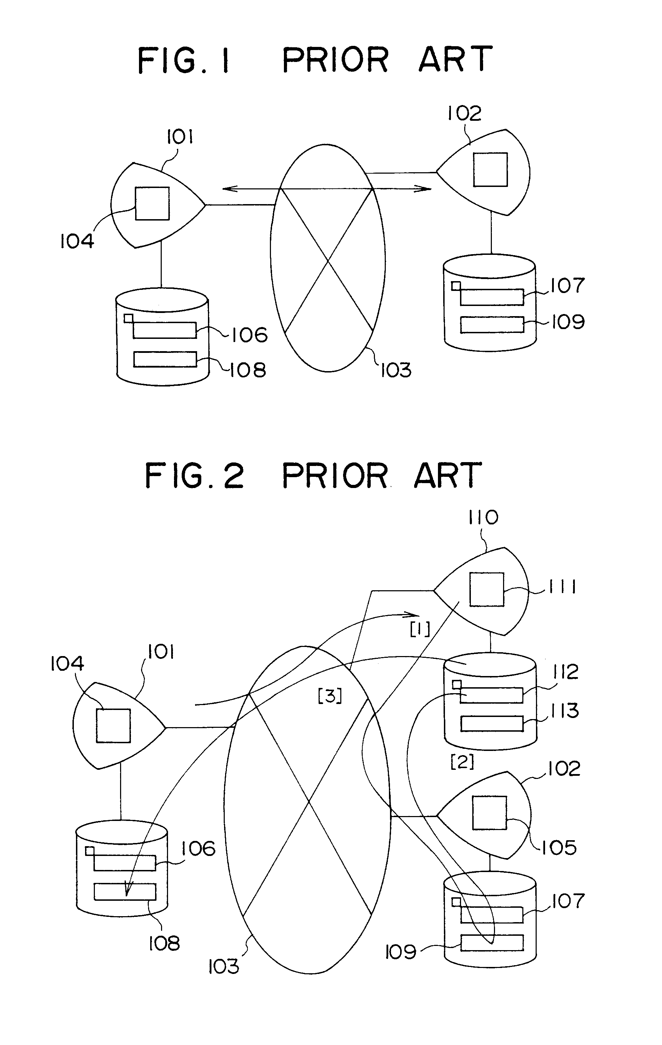

Fig. 1 is a conventional processing system called a local processing system. The system shown in Fig. 1 includes terminal stations 101, 102, a switching network 103, data processing devices 104 and 105, programs 106 and 107, and pieces 108 and 109 of process subject data.

The data processing device 104 processes the process subject data 108 stored in the terminal station 101 by using the program 106 stored in the terminal station 101. The data processing device 104 receives, as necessary, a transfer of process subject data (a part of the piece 109 of data) from the terminal station 102 via the switching network 103.

Fig. 2 shows a conventional processing system called a client/server system. In Fig. 2, parts that are the same as those shown in Fig. 1 are given the same reference numbers as in the previous figure. The system shown in Fig. 2 includes a server terminal station 110, a data processing device 111, a program 112, and process subject data 113.

When the data processing device 104 needs process subject data which does not exist in the device 104, the device 104 request the server terminal station 110 to transfer such process subject data ([1] ] in Fig. 2) . In response to the request, the server terminal station 110 refers to a list stored in its own terminal station 101, and knows that the requested data is stored in, for example, the terminal station 102. Then, the server terminal station 110 receives the data from the terminal station 102 ([2] in Fig. 2) . Then, the server terminal station 110 transfers the received data to the terminal station 104 ([3] in Fig. 2) . The data processing device 104 performs a desired process using the received data.

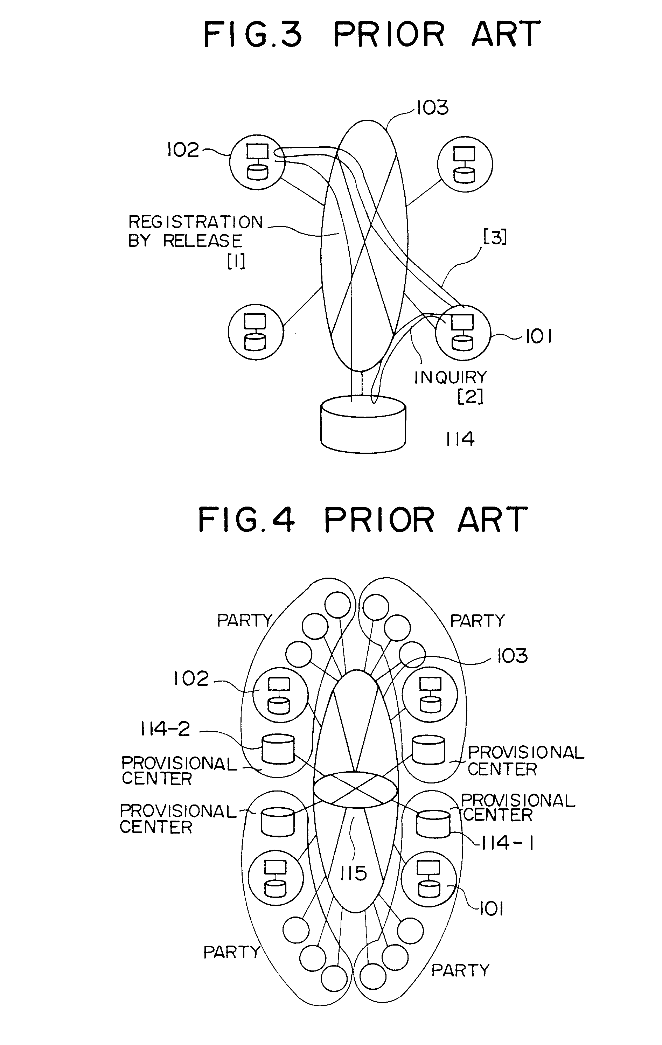

Regarding management of process subject data (management of records), systems as shown in Figs. 3, 4 and 5 have been proposed. The system shown in Fig. 3 is called a provisional center system, in which parts that are the same as parts are given the same reference numbers. The system shown in Fig. 3 includes a terminal station 104 called a provisional center.

The terminals 102 manage records stored therein by themselves, and further register information concerning their own records in the provisional center 114. When the terminal station 101 requires a record which does not exist therein, the terminal station 101 sends an inquiry to the provisional center 114. On the basis of the result of the inquiry, the terminal station 101 communicates with the terminal station 102 and receives a transfer of the requested record.

The system shown in Fig. 4 is called a plural provisional center system. In Fig. 4, parts that are the same as those shown in the previously described figures are given the same reference numbers. The system shown in Fig. 4 includes a network 115 connecting a plurality of provisional centers. In Fig. 4, a plurality of parties are connected to each other via the switching network 103. Each of the parties includes a provisional center 114-i, which operates in the same manner as the provisional center 114 shown in Fig. 3. However, when the terminal 101 of one of the parties receives a transfer of a record from the terminal 102 from one of the other parties, the provisional centers 114-i respectively provided in these parties communicate with each other via the provisional center-to-provisional center network 115.

More specifically, the terminal station 101 asks the provisional center 114-1 provided in its own party whether or not the requested record exists in the party to which the terminal station 101 belongs. In the above case, the provisional center 114-1 knows that the requested record does not exist in its own party. Then, the provisional center 114-1 asks the provisional center 114-i of each of the other parties whether or not there is the requested data. If the provisional center 114-2 informs the provisional center 114-1 that the requested data is stored in the terminal station 102 of the party in which the provisional center 114-2 is provided, the provisional center 114-1 informs the terminal station 101 that the requested data is stored in the terminal station 102. Then, the terminal station 101 receives a transfer of the requested data from the terminal station 102.

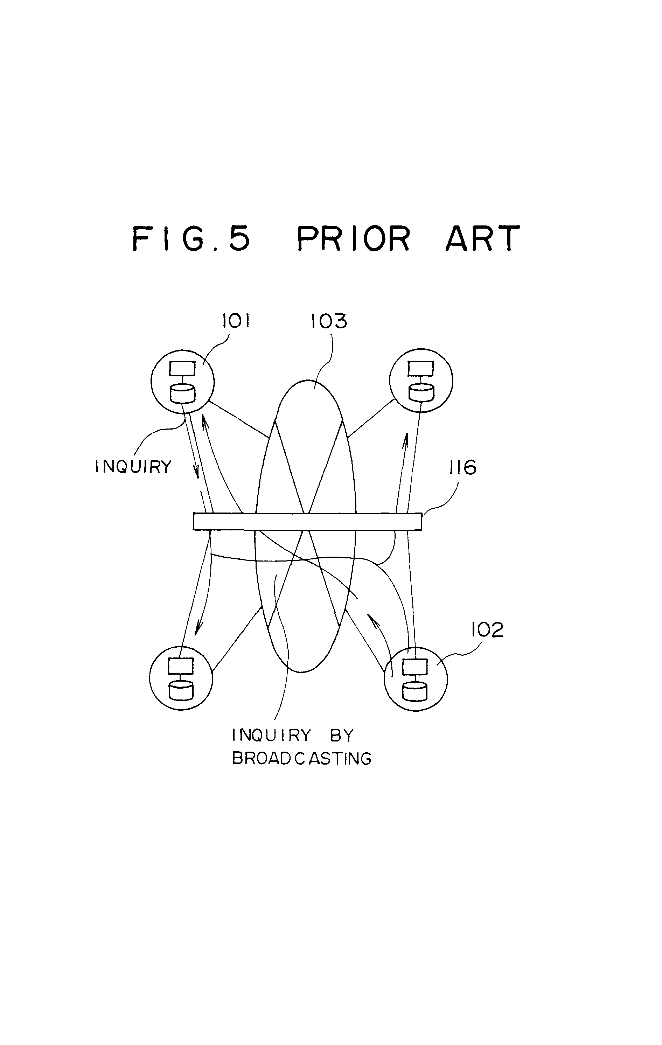

The system shown in Fig. 5 is called a broadcast system, in which parts that are the same as those shown in the previously disclosed figures are given the same reference numbers. When the terminal station 101 requests a record, the terminal station 101 broadcasts an inquiry via a global bus type LAN 116, so that all terminal stations connected to the LAN 116 are asked whether or not there is the requested data stored therein. If the terminal station 102 has the requested data, the terminal station 102 responds to the terminal station 101. In this manner, the terminal station 101 receives the requested record from the terminal station 102.

However, the above-mentioned prior art systems have a disadvantage in that it takes a long time to complete a transfer of a program or data (hereinafter, the term "data" includes a program) between the terminal stations. Hence, it takes a very long time to complete a transfer of data, as compared with the time necessary for the terminal station to access its own file and receive data therefrom. Hence, in a case where data is transferred from a station in which the data is originally stored to another station and is then updated, it is very difficult to ensure integrity of the data (in other words, to correctly update the transferred data and maintain safety of the updated data).

For example, it is very difficult to perform data management intended to maintain integrity in the server terminal station 110 shown in Fig. 2 or the provisional center shown in Fig. 3 or 4. Even when each terminal station originally having data performs the data management on their own responsibility, it is impossible for each terminal station to receive data requested from the terminal station that manages the requested data each time data is requested because it takes a long time to transfer data.

### SUMMARY OF THE INVENTION

It is a general object of the present invention to provide a system in which data can be transferred between terminal stations at a high speed substantially equal to the time necessary for each terminal station to access a file managed by itself and obtain desired data therefrom.

The above object of the present invention is achieved by a communications system comprising: a network (103); and terminal stations (101, 102) connected to the network, each of the terminal stations having a data processing function and a communications function. The network comprises: a first line (151) via which messages for controlling a communication between the terminal stations are transferred; a second line (152) via which inquiry information is broadcasted from a first one of the terminal stations which does not have desired data, said inquiry information asking the terminal stations other than the first one of the terminal stations whether or not the terminal stations other than the first one of the terminal stations have the desired data; and a third line (153) via which the desired data is transferred from a second one of the terminal stations which has the desired data to the first one of the terminal stations which needs the desired data, said third line having a bit rate higher than that of the first line.

### BRIEF DESCRIPTION OF THE DRAWINGS

Other objects, features and advantages of the present invention will become more apparent from the following detailed description when read in conjunction with the accompanying drawings, in which:
Fig. 1 is a block diagram of a conventional local processing system;
Fig. 2 is a block diagram of a conventional client/server system;
Fig. 3 is a block diagram of a conventional provisional center system;
Fig. 4 is a block diagram of a conventional plural provisional center system;
Fig. 5 is a block diagram of a conventional broadcast system;

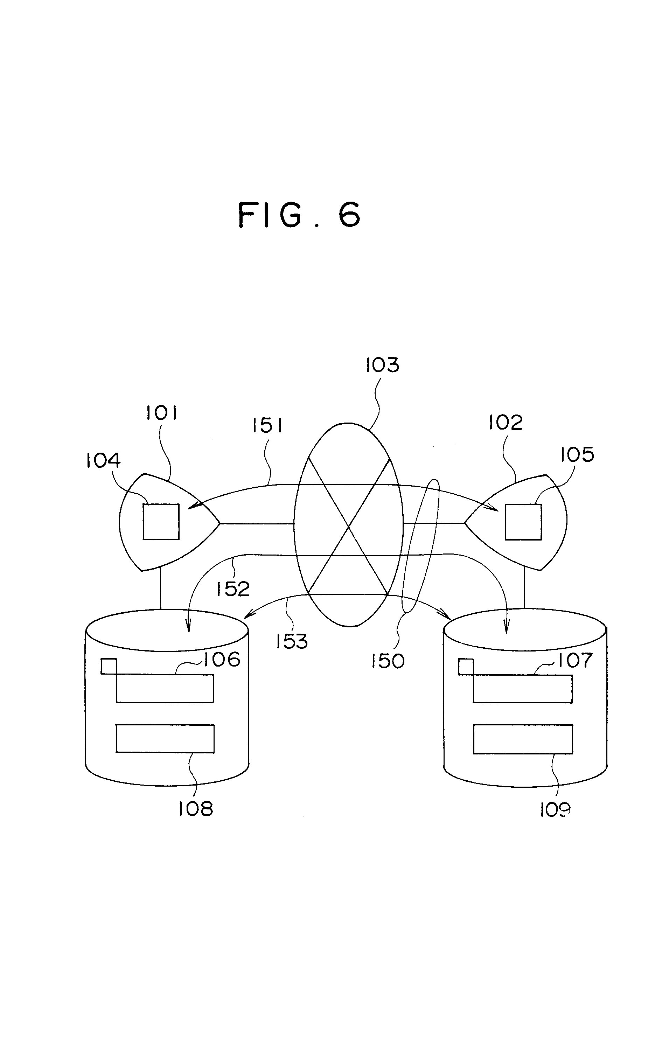

Fig. 6 is a block diagram of the principle of the present invention;

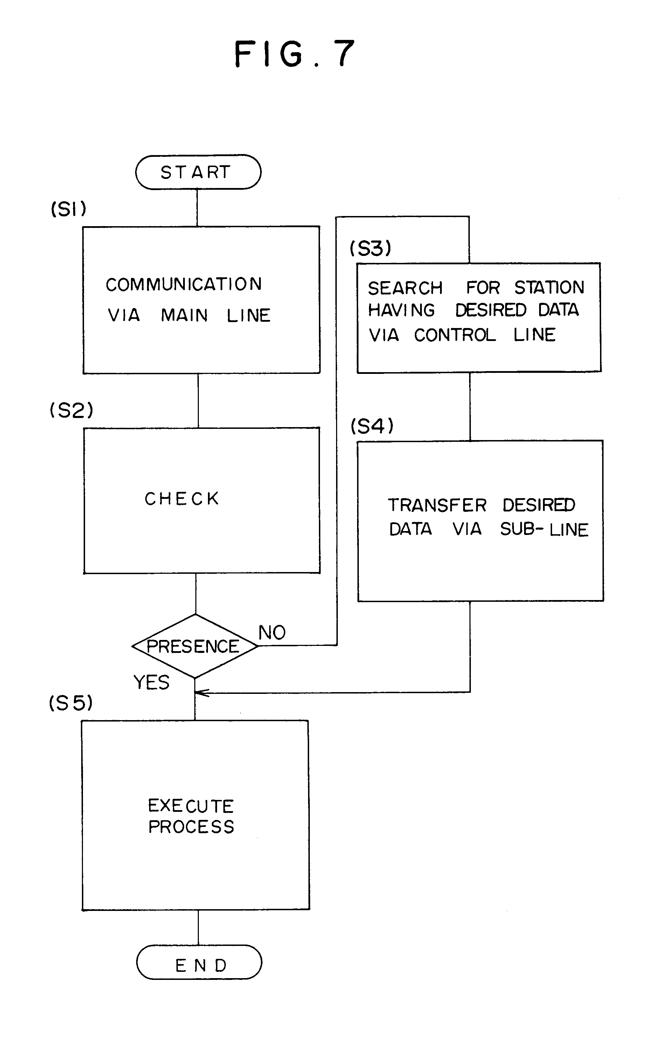

Fig. 7 is a flowchart of a three-hierarchical layer communications process according to the present invention;

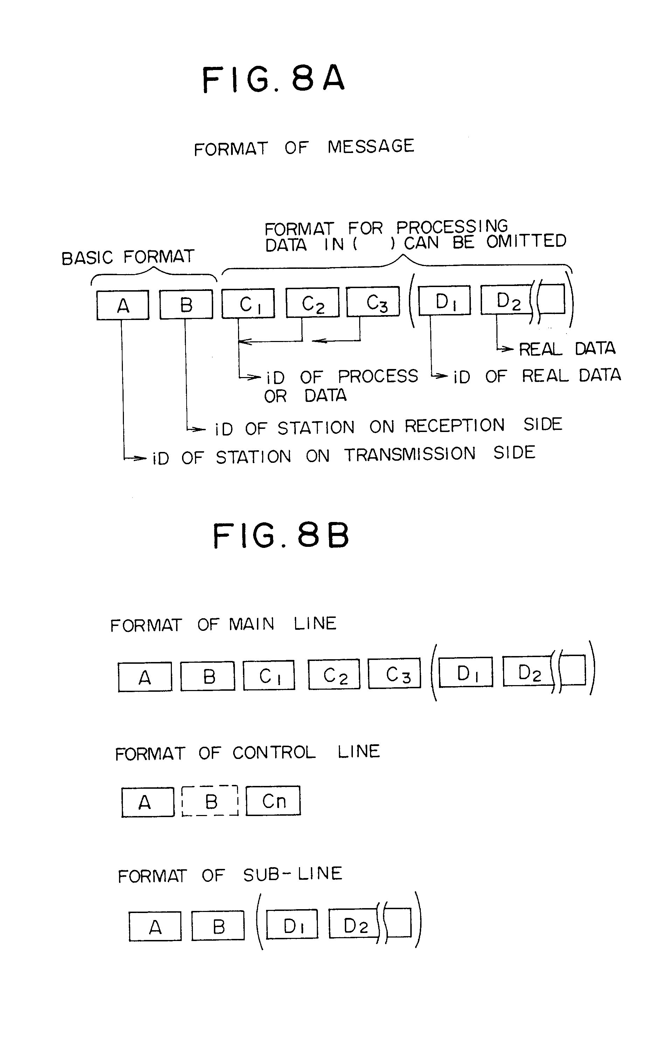

Fig. 8A is a diagram of a format of a message;
Fig. 8B is a diagram of formats of signals transferred via a main line, a control line and a sub-line;

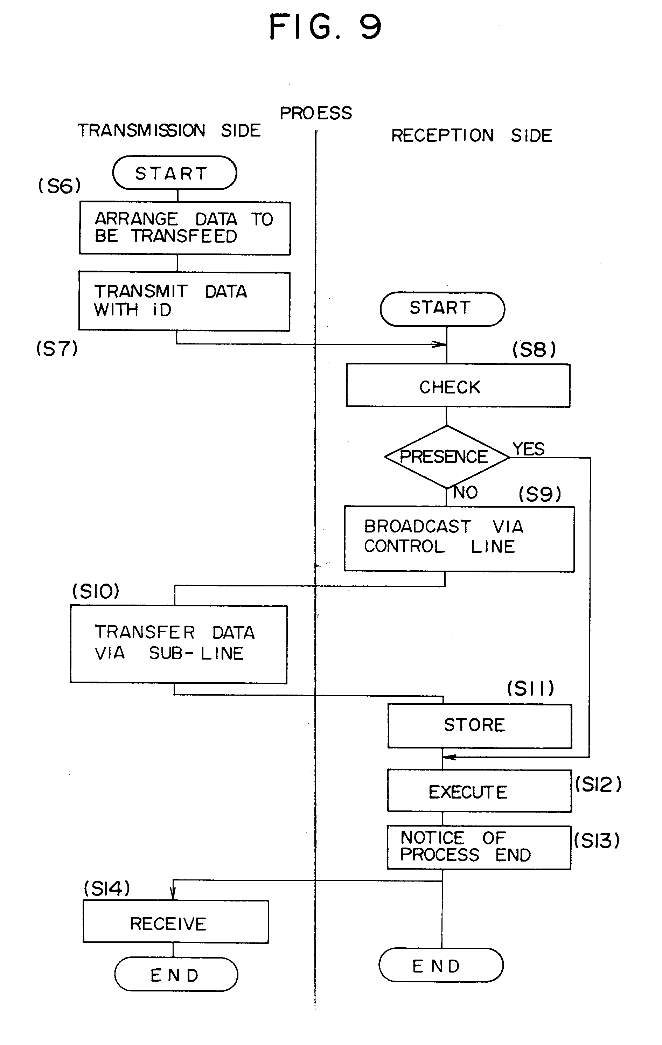

Fig. 9 is a flowchart of a process of the present invention;

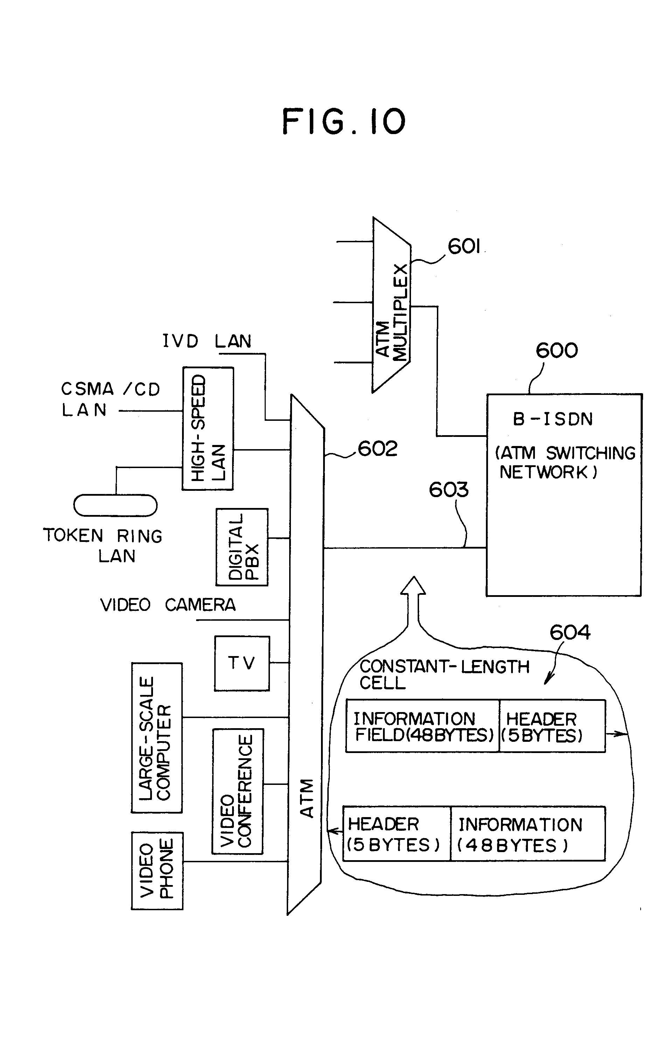

Fig. 10 is a block diagram of the concept of a broadband ISDN;

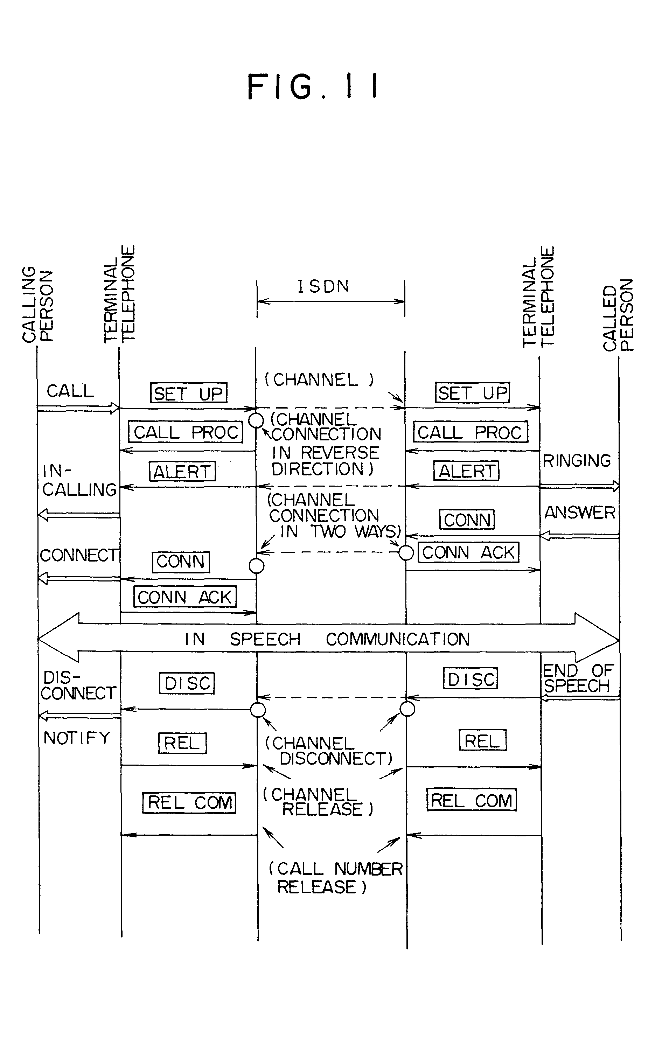

Fig. 11 is a sequence diagram of a control procedure for connecting telephones via the ISDN;

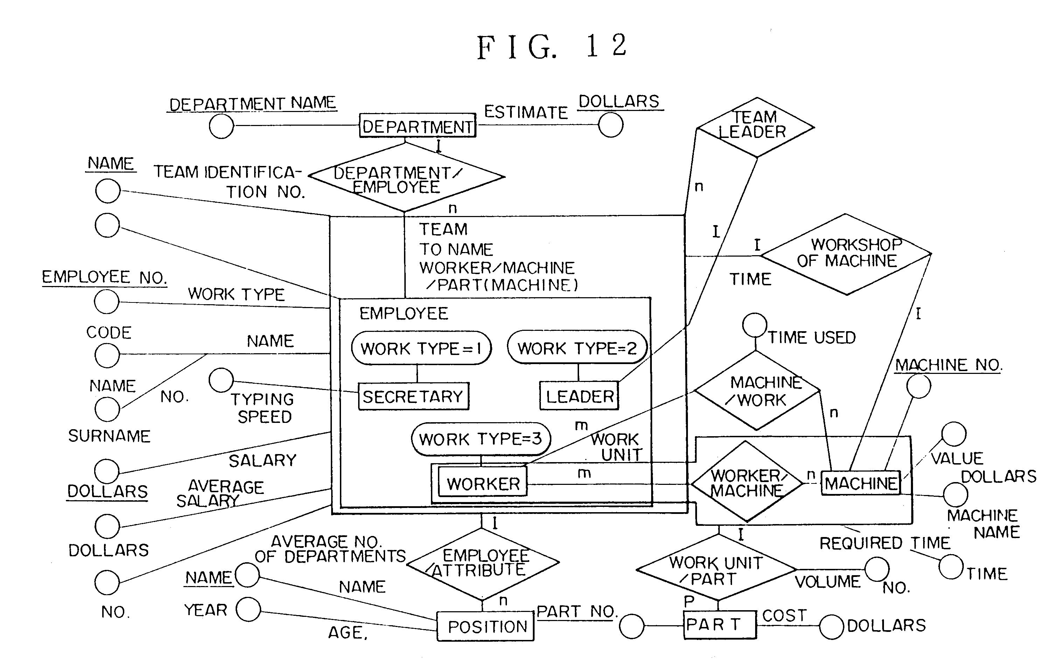

Fig. 12 is a diagram for explaining a model formed with respect to departments of a company;

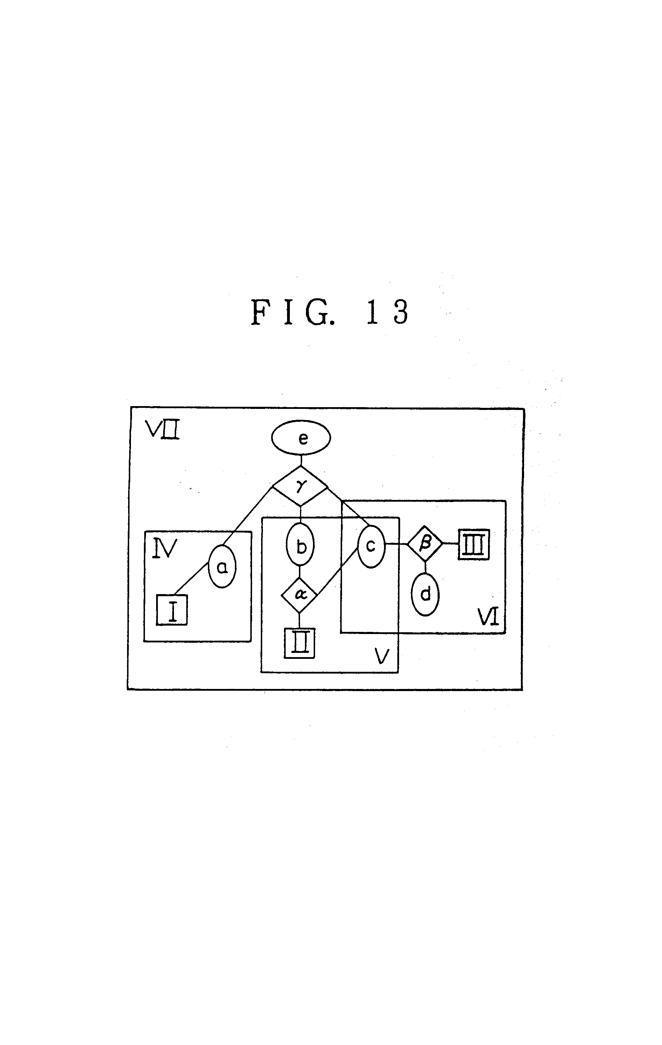

Fig. 13 is a diagram showing Fig. 12 in an abstract form;

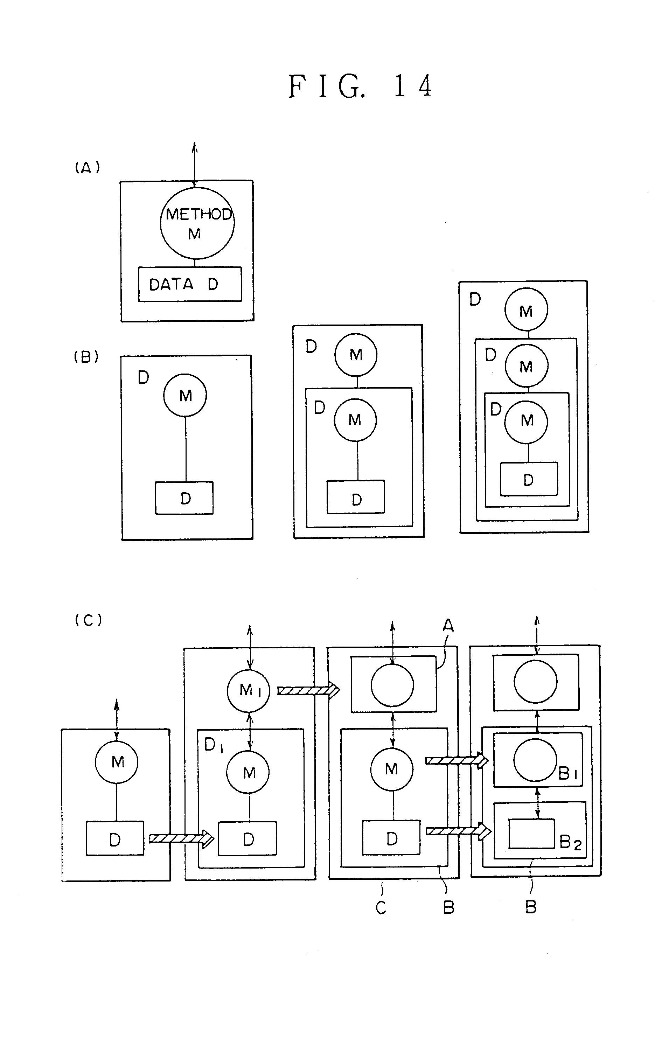

Fig. 14 in parts (A), (B) and (C) is a diagram for explaining a capsule;

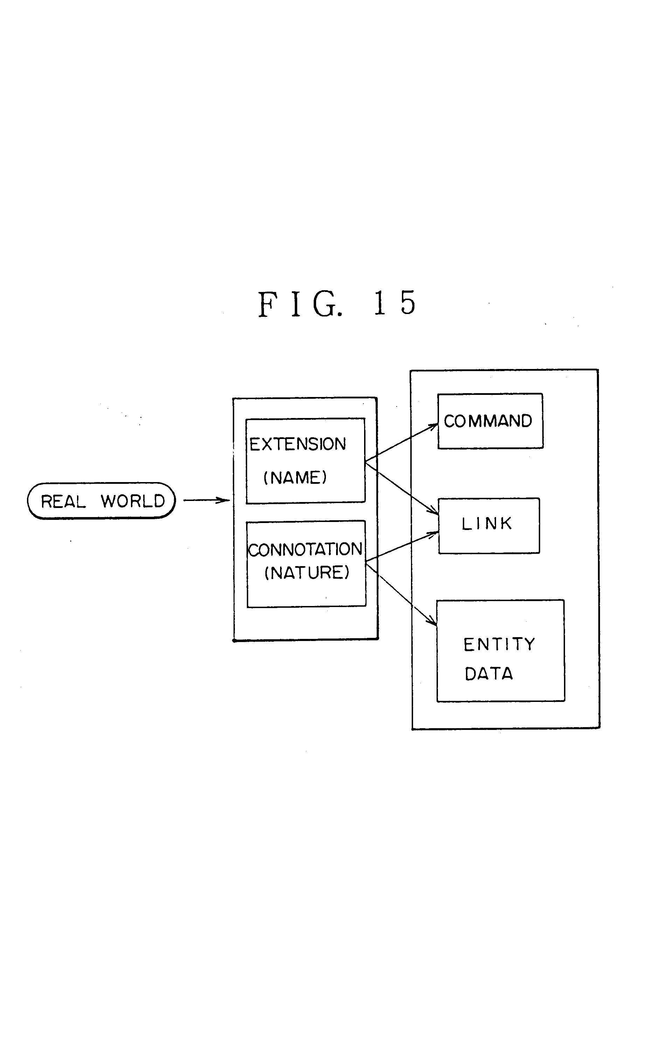

Fig. 15 is a diagram for explaining an object as a model;

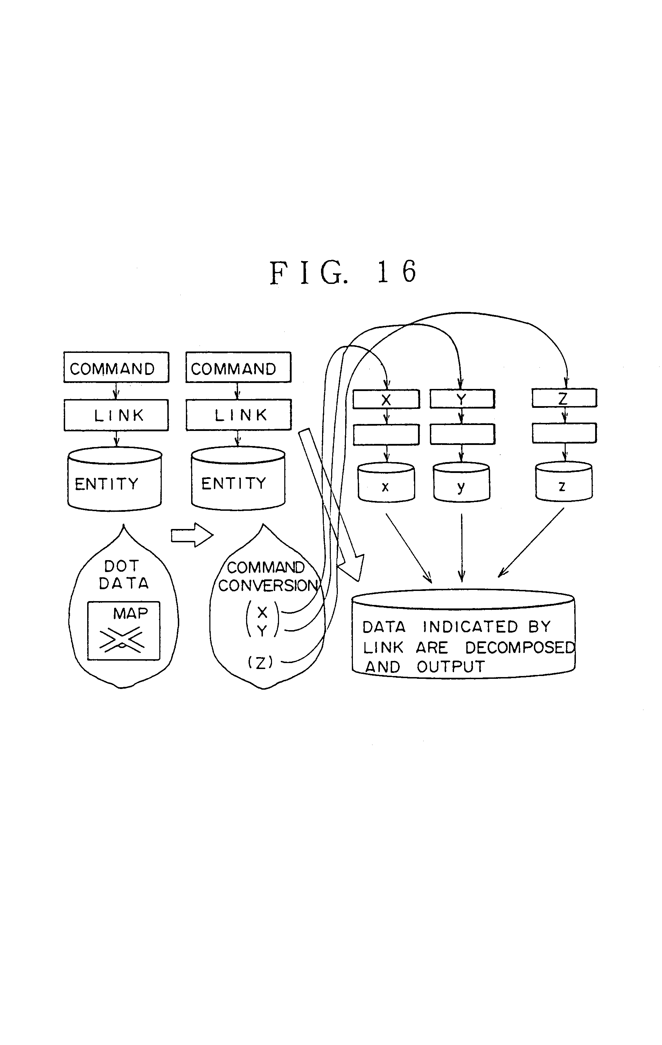

Fig. 16 is a diagram for explaining the functions of the object as the model;

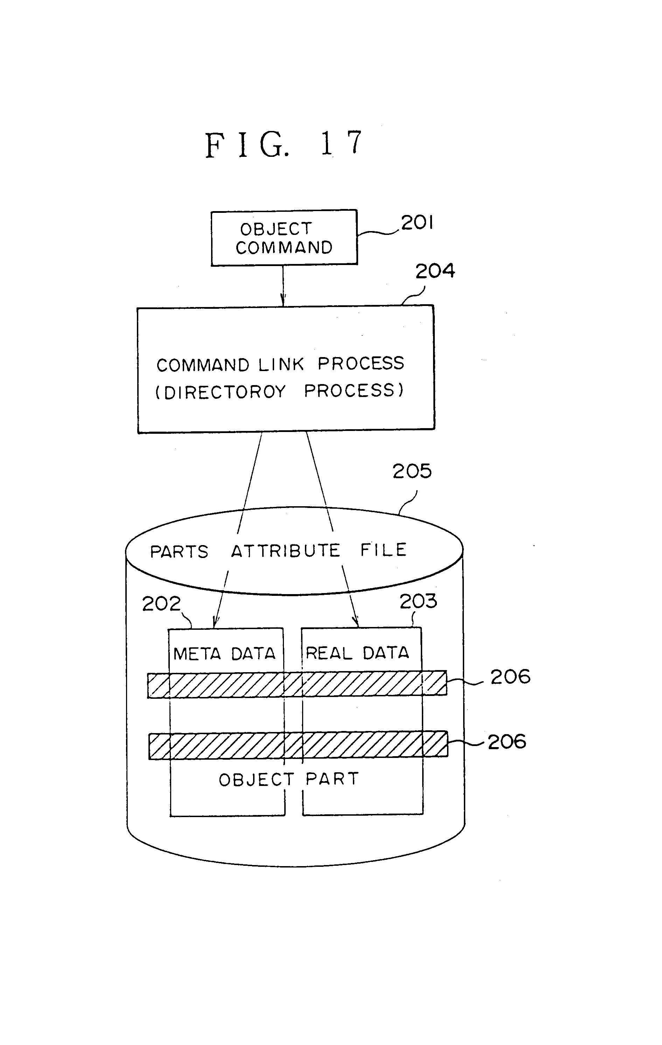

Fig. 17 is a diagram for explaining a process of treating the object;

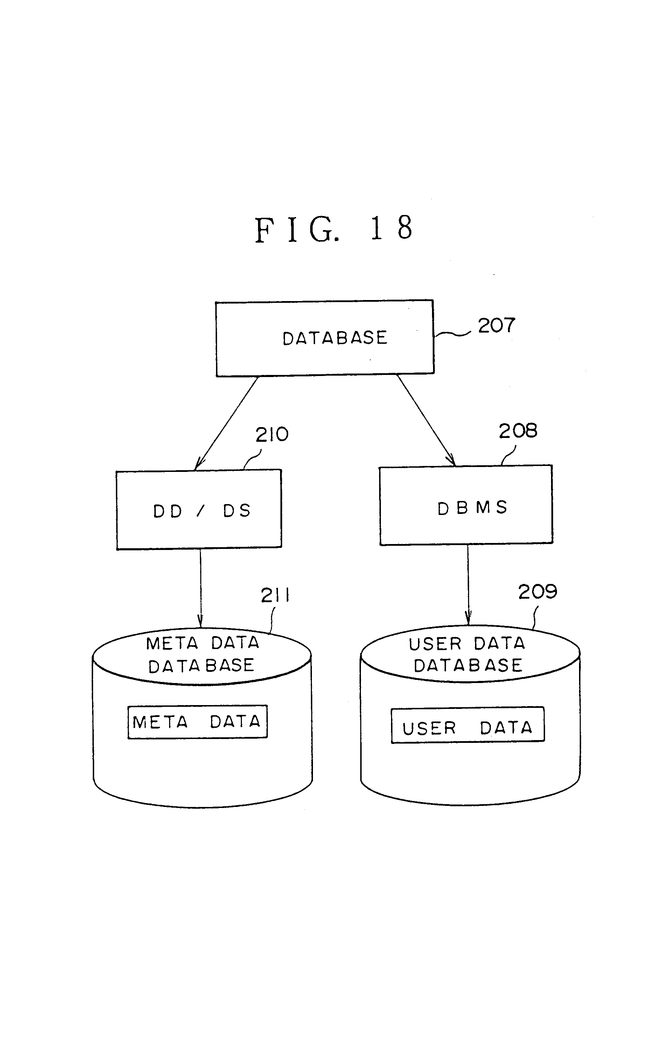

Fig. 18 is a system block diagram showing the structure of a database system;

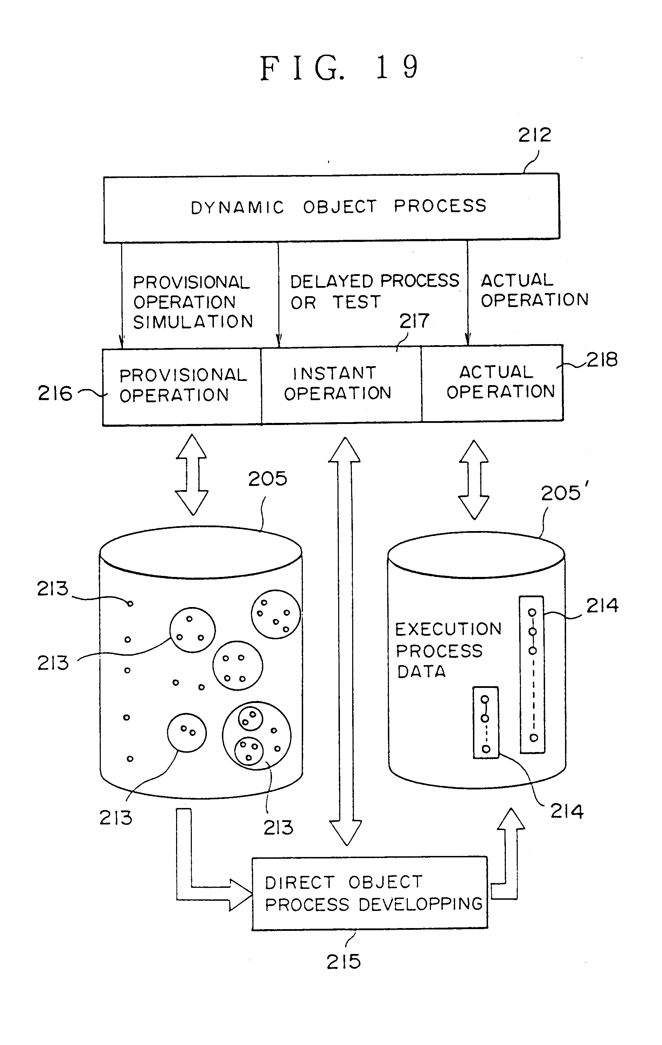

Fig. 19 is a diagram for explaining a part of the operation of a dynamic object processor;

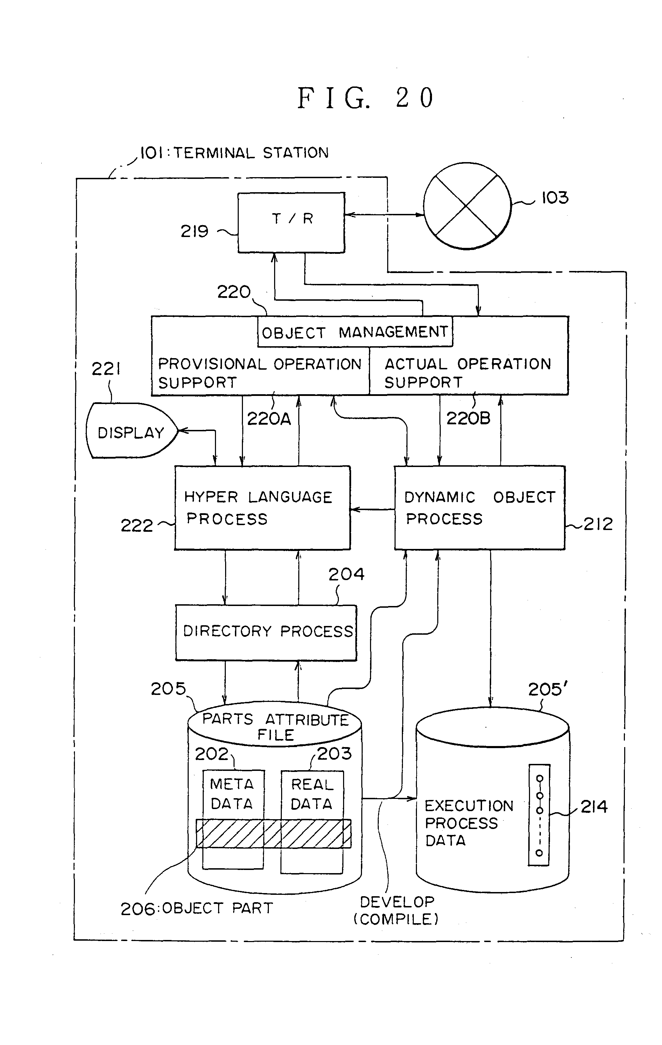

Fig. 20 is a system block diagram showing the structure of a terminal station used in an embodiment of the data processing apparatus according to the present invention; and

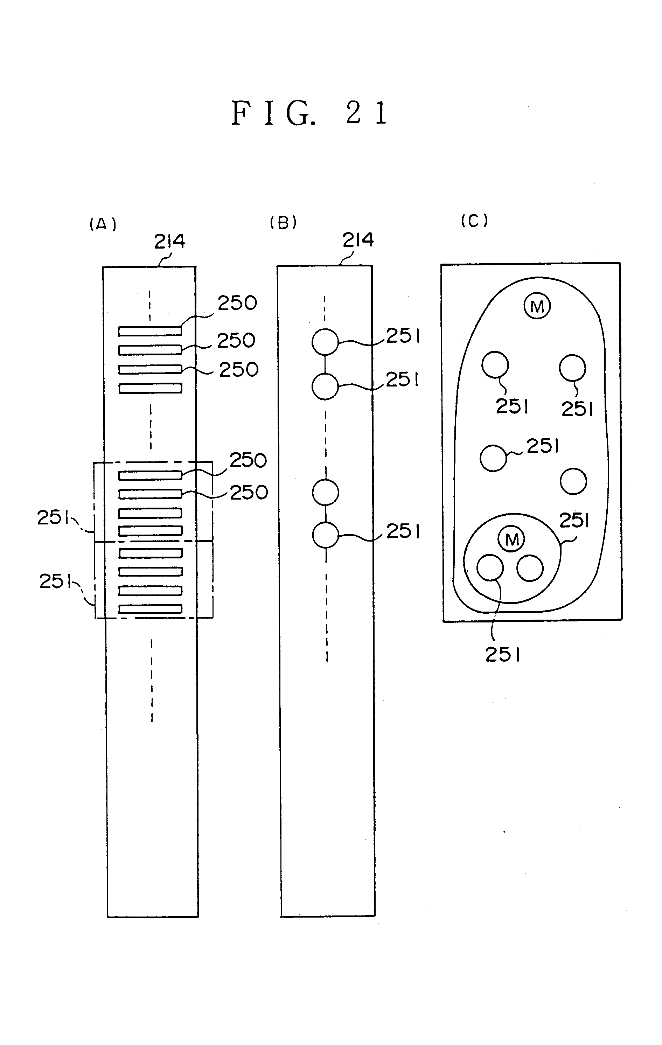

Fig. 21 in parts (A), (B) and (C) is a diagram for explaining the advantages of forming objects as capsules.

### DESCRIPTION OF THE PREFERRED EMBODIMENTS

Fig. 6 shows the principle of a three-hierarchical layer communications processing system of the present invention. A three-hierarchical layer communications processing system shown in Fig. 6 includes terminal stations 101 and 102, a switching network 103 (which includes in-company lines), data processing devices 104 and 105, programs 106 and 107, process subject data 108 and 109, and three-hierarchical layer communications line structure 150, which includes a main line 151, a control line 152 and a sub-line 153.

The main line 151 is used to transfer a normal message between terminal stations. The control line 152 is used to inquire, in a broadcasting manner, concerning the presence of desired data. The sub-line 153 is used to perform a high-bit-rate data transfer between terminal stations.

The three-hierarchical layer communications line structure 150 is realized by, for example, a broadband integrated services digital network (hereinafter, simply referred to as B-ISDN). In the B-ISDN, lines are not fixed to terminal stations, and are capable of performing communications between arbitrary terminal stations. Further, in the B- ISDN, the line bit-rate can be arbitrarily selected (a high-bit-rate transfer is possible). Furthermore, broadcasting-type communications can take place by using the control line.

A transfer of a normal message between terminals is carried out using the main line 151, which is a relatively low-bit communications line (less expensive). The terminal stations 101 and 102 respectively execute, by using the data 108 and 109 managed by the terminal stations 101 and 102, the programs 106 and 107 by means of the data processing devices 104 and 105 managed by the terminal stations 101 and 102.

Under the above condition, the following operation is carried out in case where the terminal station 102 attempts to execute a desired process, and where a relevant program is not contained in the program 107 managed by the terminal station 102 or relevant data is not contained in the data 109 managed by the terminal station 102.

The terminal station 102 inquires, by using the control line 152 in the broadcasting manner, which terminal station has the relevant program and/or the relevant data. In actuality, there are a large number of terminal stations such as 101 and 102.

If the terminal station 101 manages the relevant program and/or the relevant data, the terminal station 101 notifies the terminal station 102 of the above fact by means of the main line 151. In response to the above notification from the terminal station 101, the terminal station 102 communicates to the terminal station 101 via the main line 151 that the terminal station 102 needs the relevant program and/or the relevant data. Then, the terminal station 101 transmits the relevant program and/or the relevant data via the sub-line 153 at a high bit rate. The bit rate of the sub-line 153 is higher than that of the main line 151. The terminal station 102 receives the transferred program and/or data, and executes the above-mentioned desired process.

Processes for generating, updating and deleting programs or data are carried out by the terminal stations that have the above programs or data. It becomes possible to carry out the above management and data processes each time these processes are needed because the programs and/or data can be transferred at a high speed by means of the three-hierarchical layer communications line structure 150.

Fig. 7 is a flowchart of a three-hierarchical layer communications process according to the present invention.

In step S1, a normal communication takes place via the main line 151. In step S2, if the terminal station on the reception side of the above communication needs execution of a process after the communication is completed, the terminal station on the reception side determines whether or not data (including a program) necessary to execute the above process exists in its own terminal station. When it is determined that the data is present in the terminal station on the reception side, step S3 is performed. When it is determined that the data is not present in the terminal station on the reception side, step S5 is carried out.

In step S3, the terminal station on the reception side inquires, in the broadcasting manner using the control line 151, of all the other stations whether or not there is desired data stored therein in order to identify the terminal station which manages the desired data. In step S4, when the terminal station that manages the desired data is identified, the terminal station on the reception side receives the desired data transferred via the sub-line 153. In step S5, when all the desired data has been received, the terminal station on the reception side integrates the received data with other data, and executes the desired process.

Fig. 8A illustrates a format of a message. Fig. 8B shows formats of data transferred via the main line 151, the control line 152 and the sub-line 153.

The message format shown in Fig. 8A is segmented into a basic format and a format for processing. The basic format includes transmission station identification information iD and reception station identification information iD. The format for processing includes identification information iD indicating the content of a process, identification information iD specifying data, real data identification information iD specifying real data, and the above real data. In Fig. 8A, A, B, C and D respectively correspond to the above identification information.

The formats shown in Fig. 8B correspond to the message format shown in Fig. 8A. The format of the main line 151 is the same as the message format shown in Fig. 8A. It will be noted that a message is transferred via the main line 151. The format of the control line 152 shown in Fig. 8B includes the transmission station identification information (A) the reception station identification information (B) and the identification information indicating a desired program and/or data (Cn: n = 1, 2, 3, ...). In the broadcasting manner, the reception station identification information is omitted. The format of the sub-line 153 shown in Fig. 8B includes the transmission station identification information (A), the reception station identification information (B), real data (D2) and real data identification information (D1) indicating the above real data.

The data identification information iD contains the terminal number of the terminal station that manages the data indicated by the above identification information iD. The terminal number is added to the leading end of the data identification information iD. Hence, when a terminal station receives the data identification information iD and determines that the received data identification information iD indicates its own station, it determines that the data indicated by the data identification information iD is managed by its own station. Normally, each of the terminal stations does not manage the terminal numbers of the other terminal stations.

Fig. 9 illustrates a process of the present invention. In step S6, data to be transmitted is arranged on the transmission side. In step S7, the arranged data is transmitted with the transmission and reception station identification information iD added thereto. In step S8, the terminal station on the reception side determines whether or not it has desired data necessary to execute a process. When such data is available, step S12 is carried out. When the data is not available, step S9 is carried out.

In step S9, the data identification information iD specifying the desired data is broadcasted via the control line 152 in the format shown in Fig. 8B. In step S10, the terminal station that manages the desired data transfers the desired data at a high bit rate via the sub-line 153. In step S11, the terminal station on the reception side receives the transferred data and stores the received data in a memory. In step S12, the process is ended. In step S13, the terminal station on the reception side sends a process completion signal to the terminal station on the transmission side. In step S14, the terminal station on the transmission side receives the process completion signal.

Each of the stations has a link table with respect to data respectively managed by each of the stations. More concretely, the link table contains information accessible by the data identification information iD. Such assessable information contains the beginning address of the data indicated by the data identification information iD, and the situation of storage of the data.

Fig. 10 shows the concept of a B-ISDN system. In order to enable a high-bit-rate communication at a bit rate ranging from a few hundred Mbps to a few Gbps, the BISDN utilizes optical fiber cables. In Fig. 10, a reference number 600 indicates a B- ISDN (an ATM (asynchronous transfer mode) switching network), a reference number 601 an ATM multiplexer, 602 an ATM customer equipment, 603 an optical fiber cable, 604 a constant-length cell transferred via the optical fiber cable 603.

Fig. 10 shows an outline of services considered in the CCITT. In the ATM, communications can take place at arbitrary bit rates, while the communications bit rate is constant in the conventional line circuit mode. Further, in the conventional packet mode, the protocol process has a large load because it needs a software process, while in the ATM, a large-capacity data transmission can be performed due to the use of optical fiber cables. Further, the protocol process in the ATM is simplified because of the use of hardware.

In the ATM, a variety of digitized information, such as voice data and image data, is inserted into a constant-length block called a cell and similar to a packet. Information is multiplexed in block units, and is asynchronously transferred. Line-circuit type data and packet-type data can be multiplexed without discriminating between the different types of data. Hence, it is possible to flexibly handle pieces of data having different bit rates by a multi-traffic process and to efficiently use communication paths.

In the B-ISDN, B channels, D channels and H channels are available. The B channels have a bit rate (channel rate) of 64 Kbps (it is possible to set low-bit-rate channels of 8, 16 and 32 Kbps in the B channels). The D channel has bit rates of 16 Kbps and 64 Kbps. The H channel has bit rates of 384 Kbps, 1536 Kbps, 1920 Kbps, 30 - 44 Mbps, and 90 - 138 Mbps.

When the present invention is applied to the B- ISDN, the main line 151 is formed by the B channels, the control line 152 is formed by the D channel, and the sub-line 153 is formed by the H channel.

Fig. 11 shows a control sequence for connecting telephones to each other in the ISDN. The symbols used in Fig. 11 are defined as follows:
SET UP: request for call set up
CALL PROC: message indicating that the process for setting up a call is being carried out
ALERT: message indicating that a called telephone is being called
CONN: message indicating that the called telephone has responded to the call
CONN ACK: confirmation with respect to CONN
DISC: request for releasing a call
REL: message indicating that a channel is completely disconnected and request for releasing a call number
REL COM: message indicating that a channel and call number have been released.

Calling is carried out in response to a call from a caller, and a channel connection between the calling telephone and the called telephone is established when the called telephone responds to the call. Then, a communication takes place, and the established channel is disconnected in response to the end of the communication. Thereafter, the channel is released and the call number is also released.

With the above-mentioned three-hierarchical layer communications process according to the present invention, it becomes possible to transfer data between terminal stations at a high speed each time each station needs data. If each station knows the terminal station in which necessary data is stored, it is possible to omit the inquiry process in the broadcasting manner by means of the control line 152.

A description will now be given, with reference to Figs. 19 through 21, of an example of data and data identification information that can be processed in the system of the present invention.

Fig. 12 shows a real world, that is, an example of a model for departments of a company. Within a box representing "employees" in Fig. 12, there is a "secretary" belonging to a "work type = 1 ", a "leader" belonging to a "work type = 2", and a "worker" belonging to a "work type = 3". A box representing "employees" belongs to a box representing a "team".

The "leader" is related to the "team" under the relationship "team leader". In addition, the "worker" is related to a "machine" under the relationship "worker/machine" within the box representing "work unit".

The "team" and the "machine" are related under the relationship "machine/workshop". The "worker" and the "machine" are related under the relationship "machine/worker". In addition, the "employee" and the "department/employee" are related under the relationship "department".

Furthermore, the "employee" and the "position" are related under the relationship "employ- ee/attribute". The "work unit" and the "part" are related under the relationship "work unit/part".

The following relationships also exist.
(1) The "department" is related to the object "department name" and the object "dollars".
(2) The "team" is related to the object "name" by a team identification number, related to the object "employee number" by the work type, related to the object "code name" and the object "surname" by the name, related to the object "dollars" by the salary, related to the object "dollars" by the average salary, and related to the object "number" by the average number of departments.
(3) The "secretary" is related to the object "number" by the typing speed.
(4) The "position" is related to the object "name" by the name, and related to the object "year" by the age.
(5) The "part" is related to the object part number" and the object "dollars".
(6) The "work unit/part" is related to the object "number" by the volume.
(7) The "work unit" is related to the object "time" by the required time.
(8) The "machine" is related to the object "machine number", the object "dollars" and the object "machine name".
(9) The "machine/work" is related to the object "time" by the time used.

The model shown in Fig. 12 can generally be represented as shown in Fig. 13 if the "behavior" (or method) is indicated by a circular box, the "data" is indicated by a rectangular box, and the "relationship" is indicated by a rhombic box. In other words, (1) a method "a" and a data "I" are combined and function as one larger data "IV", (2) methods "b" and "c" are related to a data "II" by a relationship "a" and function as one larger data "V", (3) methods "c" and "d" are related to a data "III" by a relationship ";8" and function as one larger data "VI", and (4) a method "e" is related to data "IV" and "V" by a relationship "_{T}" and function as a still larger data "VII". In other words, the behaviors (or methods) are gathered and represented as a larger group.

Each circular box, rectangular box and rhombic box shown in Fig. 13 can be treated as an individual object.

The forming of a capsule shown in Fig. 14 (A) will now be considered for a collection of the method "a" and the data "I" shown in Fig. 13. In Fig. 14 (A) an opening is formed at the top of the capsule to indicate that a message communication can be made. If this opening of the capsule were closed as shown on the left side of Fig. 14 (B), such a capsule would then correspond to the data "IV" which is a collection of the method "a" and the data "I" in Fig. 13. If a composite object is obtained by adding a method "M" to the data "D" (capsule) shown on the left side of Fig. 14 (B), the data shown at the central part of Fig. 14 (B) is obtained. Further, if a composite object is obtained by further adding a method to the data shown at the central part of Fig. 14 (B), the data shown on the right side of Fig. 14 (B) is obtained. Hence, Fig. 14 (B) shows the formation of composite objects by successively adding methods.

The formation of the composite objects is not limited to that shown in Fig. 14 (B). For example, the composite objects may be formed as shown in Fig. 14 (C). In Fig. 14 (C), the data "D" of the object shown on the leftmost side is replaced by an object which is made up of a method and a data, as shown on the second leftmost side. In this case, a message passing is required between a method "M1" and a data "D1 ", and the method "M1" becomes one object as shown on the second rightmost side in Fig. 14 (C). As a result, objects "A" and "B" exist within an object "C", and the message passing exists between the objects "A" and "B".

Furthermore, if the method "M" of the object "B" is replaced by an object "B1" and the data "D" of the object "B" is replaced by an object "B2", both the object "B1" and "B2" exist within the object "B" and the message passing exists between the objects "B1" and "B2" as shown on the rightmost side in Fig. 14 (C).

Therefore, the composite objects are formed by successively combining the objects. For example, the so-called primitive objects which will be described later are combined to form a capsule object, the capsule objects are combined to form an event object, and the event objects are combined to form a system object.

The data "D" described above is generally made up of a plurality of process units which are the subject of the processing. On the other hand, the method "M" may be considered as information or an information group instructing how the plurality of processing units are to be utilized. The object which is represented in Fig. 14 is a "processing unit" which is treated as an individual "processing unit" or a collection of "individual processing units".

As shown in Fig. 13, the individual objects "I", "II" and "III" form a part of the larger objects "IV", "V" and "VI". In addition, the objects "IV", "V" and "VI" form a part of a still larger object "VII". In other words, the objects "IV", "V" and "VI" are in an "is-a" relationship or a "part-of" relationship with the object "VII" when viewed from the object "VII".

If the objects "I", "II" and "III" are regarded as minimum units, these objects "I", "II" and "III" may be said to be primitive objects. The capsule object is formed of a collection of such primitive objects. The event object is formed by a collection of such capsule objects. Furthermore, a still larger system object is formed by a collection of such event objects.

The objects described above which are made up of a collection of smaller objects are respectively referred to as a composite object. The primitive object is included in the concept of the composite object. However, the primitive object is an object of the minimum unit as described above. For this reason, when a reference is generally made to a "composite object" or an "object", it is better to exclude the primitive object which exists by itself and cannot be decomposed further.

The object in the capsule form is generally made up of the composite objects described above in the capsule form.

The individual objects can be represented by the following model. That is, Fig. 15 is a diagram for explaining the object as a model.

A thing of the real world, such as a photograph, can be specified by the name which describes the photograph, and the nature of the photograph. The nature of the photograph indicates what kind of picture the photograph is, such as the person who took the picture and the time when the picture was taken. Hence, the photograph can be represented by a model using (i) the command which is used as the name specifying the photograph, (ii) the actual picture (entity data) of the photograph formed by black and white dots, and (iii) the link which describes the nature of the photograph, the location where the actual picture is stored, the relationship of the people in the photograph and the like.

The individual object described above can also be represented by a model such as that shown in Fig. 15 using the command, the link and the entity data.

Fig. 16 is a diagram for explaining the functions of the object as a model. As shown on the left side of Fig. 16, the object can be described using the command, the link and the entity data. It may be regarded that the dot data shown in Fig. 16 are given to the entity data. The capsule object, the event object and the system object are generally given a description specifying other objects X, Y and Z as the entity data, related to these other objects X, Y and Z, and use entity data x, y and z of these other objects X, Y and Z as shown on the right side of Fig. 16.

Fig. 17 is a diagram for explaining the processing of treating the object. An object command 201 shown in Fig. 17 is the same as the commands shown in Figs. 15 and 16. In other words, the object command 201 is the name for specifying the object. A meta data 202 shown in Fig. 17 corresponds to the links shown in Figs. 15 and 16. That is, the meta data 202 is a data (description of real data) describing the real data with significance, such as the name, comment and command. In addition, the "is-a" hierarchy relationship, the "part-of" hierarchy relationship, and the sequential relationship between the objects are described in the meta data 202. The comment is a description which significantly describes what the real data is when describing the real data. In other words, the comment may take the form of a general flow chart, a detailed flow chart or a source program. An entity data (real data) 203 shown in Fig. 17 corresponds to the entity data shown in Figs. 15 and 16, and the program for executing the process is treated as one real data.

A command/link processor 204 shown in Fig. 17 is also referred to as a directory processor. When one new object is formed, a command (also referred to as an object command) which is the name of this object is set. In addition, storage locations for the real data 203 and the meta data 202 are allocated, and a command/link table is formed. In this case, the type of object is determined, thereby determining the size of the object. Then, measures are taken so that a combination of the meta data 202 and the real data (entity data) 203 can be input and output using the command/link table. Further, the input/output process is carried out. The above combination of the meta data 202 and the real data 203 will be named an object part 206. The object part 206 can be specified using the object command.

Fig. 18 shows the structure of a database system. The database system shown in Fig. 18 includes a database 207, a database management system (DBMS) 208, a user data database 209, a data dictionary and directory system (DD/DS) 210, and a meta data database 211. The structure itself of such a database system is known.

The user data database 209 collectively stores the user data. The DBMS 208 centrally controls the user data database 209, and carries out processes such as generation, deletion, correction and input/output with respect to the user data.

On the other hand, as the number of individual user data increases and the volume of the individual user data increases, the meta data are formed to give descriptions such as explaining the role of the individual user data. The meta data database 211 collectively stores the meta data. The DD/DS 208 centrally controls the meta data database 211.

The object part 206 in the parts attribute file 205 shown in Fig. 17 may be regarded as a collection of the user data within the user data database 209 shown in Fig. 18 and the meta data within the meta data database 211 shown in Fig. 18. Of course, in the conventional database system, the DBMS 208 and the DD/DS 210 shown in Fig. 18 operate independently, and accesses to the contents of the user data database 209 and the contents of the meta data database 211 are made independently. But in the case shown in Fig. 17, the real data 203 and the meta data 202 are combined and treated as one object part 206 by specifying the object part 206 by the object command.

Fig. 19 is a diagram for explaining a part of the operation of a dynamic object processor. A dynamic object processor 212 shown in Fig. 19 has a provisional operation mode 216 for carrying out a simulation or the like, an instant operation mode 217 for making a test or the like, and an actual operation mode 218 for carrying out a data processing or a communication with another terminal.

The parts attribute file 205 shown in Fig. 19 corresponds to the parts attribute file 205 shown in Fig. 17. On the other hand, the parts attribute file 205' shown in Fig. 19 stores the execution process data 214 which is obtained by compiling all or a part of the contents of the parts attribute file 205 into a form that is suited for executing the actual operation at a high speed. The execution process data 214 for the case of an object program for executing the process is generally made up of several tens to several hundreds of steps which are coupled in series in the processing sequence of the processing units.

Objects 213 shown in Fig. 19 are the objects described above. More particularly, the objects 213 may generally include the primitive object, the capsule object, the event object and the system object. As described above in conjunction with Fig. 17, it may be considered that the objects 213 are stored in the form of object parts 216 so that the object parts 216 can be specified by the corresponding object commands.

A direct object process developing process 215 shown in Fig. 19 develops the individual objects 213 or, develops a plurality of objects 213 in a collective manner, and obtains the execution process data 214.

As described above in conjunction with Fig. 14, the data are generally gathered into a process unit in the form of a composite object, and becomes a unit which displays a behavior for executing a process which has a certain target. Such composite objects are stored in the parts attribute file 205 in the form of the object parts 206 which are specified by the object commands 201 as shown in Fig. 17.

When generating a new processing function, a new object is generated so that the new processing function can be obtained. Alternatively, existing objects are coupled depending on the common target, so as to form a new object which can exhibit the new processing function. The above new object is prepared as one of the object parts 206.

When the object is generated, a simulation is made to determine whether or not the object actually functions correctly. Alternatively, a provisional operation may be carried out with respect to the object for which the simulation has been made. The above processes correspond to the provisional operation mode 216 shown in Fig. 19. The dynamic object processor 212 utilizes the contents of the parts attribute file 205, and a simulation of a desired operation is made.

The object 213 or the object group which operates normally as a result of the provisional operation mode 216 is developed into the execution process data 214, that is, compiled into one execution process data 214, because a large amount of communications would be required with the object management unit 220 shown in Fig. 20 and the processing speed would be slow if not developed. This developing process is carried out by the direct object process developing process 215 shown in Fig. 19, and the execution process data 214 is stored in the parts attribute file 205'.

In the dynamic object processor 212, a delayed process is temporarily carried out with respect to a predetermined process by utilizing the contents of the parts attribute file 205 or, the direct object process developing process 215 is started to generate the execution process data 214 if a test process or the like needs to be made. In Fig. 19, such processes are shown as the instant operation mode 217.

The actual operation mode 218 shown in Fig. 19 is a mode in which the actual operation is carried out using the execution process data 214.

In the meta data within the parts attribute file 205, it may be regarded that there exist the significant data related to the nature of the object, the description instructing the coupled relationship with respect to the object (object indicated by "is-a") of a higher hierarchy when viewed from its own object, and the description instructing the coupled relationship with respect to the object (object indicated by "part-of") group of a lower hierarchy included in its own object.

Fig. 20 shows the structure of the terminal station used in the embodiment of the data processing apparatus according to the present invention. In Fig. 20, those parts which are the same as those corresponding parts in the previously described figures are designated by the same reference numerals. In Fig. 20, the elements 202, 203, 204, 205, 205', 206, 212 and 214 correspond to those shown in Figs. 17 and 19. The terminal station 101 shown in Fig. 20 carries out a process using the execution process data 214 or carries out a communication with another terminal station (not shown) via the LAN or switched circuit 103.

The transmitter/receiver 219, the object management unit 220, a display 221, a hyper language processor 222 and the like are provided within the terminal station 101 shown in Fig. 20.

The directory processor 204 shown in Fig. 20 carries out the process described above with reference to Fig. 17. In addition, the dynamic object processor 212 shown in Fig. 20 carries out the process described above with reference to Fig. 19.

A provisional operation support 220A of the object management unit 220 shown in Fig. 20 is a support function corresponding to the operation up to the start of the provisional operation mode 216 shown in Fig. 19. An actual operation support 220B of the object management unit 220 shown in Fig. 20 is a support function corresponding to the operation up to the start of the actual operation mode 218 shown in Fig. 19.

The hyper language processor 222 shown in Fig. 20 has a "parts display/select" function, and retrieves and outputs from the display 221 an object part which is usable. If a suitable object part does not exist, a part is specified as a new object part by using a "part specify" function. It is possible to generate a class object part by an "attribute set" function, and to generate an instance object part by a "schema function" or the like.

The "part display" function using the display 221 includes (i) content display for outputting names and comments, (ii) display of attribute and schema indicating the content of the object part, and (iii) display of class attribute and instance constant, which are meta data of the object part.

A "parts combining" function of the hyper language processor 222, that is, the function of combining the object parts and obtaining a larger composite object part, includes functions for adding, changing and deleting the attribute related to the class formation and functions for adding, changing and deleting schema related to the instance constant.

A "user image forming" function of the hyper language processor 222 inputs data of the image into a buffer of an "image formation and display" class to form an instance when forming and displaying the image. For this reason, the "user image forming" function corresponds to forming the image class into an instance.

A "provisional operating" function of the hyper language processor 222 temporarily realizes a capsule shown in Fig. 14 in a temporary memory by linking a method indicated by the class when the instance receives a message, so as to execute the behavior of the corresponding capsule.

A "part change" function of the hyper language processor 222 changes the object part by changing, adding and deleting the attribute or schema. In addition, a "part registering" function of the hyper language processor 222 registers the object part in the parts attribute file 205 in correspondence with the object command (name of the object part).

The "developing (compiling)" shown in Fig. 20 represents the direct object process developing process 215 shown in Fig. 19. In the developing process, the development is made to an execution process data 214 which is as large as possible depending on the size of the temporary memory of the data processing apparatus.

The object management unit 220 controls the hyper language processor 222 shown in Fig. 20, so as to hold the object part 206 in the parts attribute file 205 as described above. In addition, the object management unit 220 controls the dynamic object processor 212 shown in Fig. 19 to carry out operations such as in the provisional operation mode 216, the instant operation mode 217 and the actual operation mode 218. In addition, depending on a message reception via the LAN or switched circuit 203, the object management unit 220 starts the instance in the provisional operation mode 216, operates the data processing apparatus by provisionally forming the capsule in the temporary memory, and makes a message transmission based on the result of the processing. Of course, if an execution process data 214 which has already been developed exists, the developed execution process data 214 is executed to make a message transmission to the remote terminal station.

When carrying out the process within the home terminal station 101, the desired object part may not exist within this terminal station 101. In addition, the attribute and/or schema may not exist. In such cases, a learning process is carried out by the home terminal station 101 by entering the missing object part, attribute and/or schema in response to a data transfer which is received from the remote terminal station via the LAN or switched circuit 103.

Fig. 21 is a diagram for explaining the advantages of forming the objects in the form of the capsule. If the execution process data 214 is taken as an example, the execution process data 214 may be given as a series of commands (or command groups) 250 which are coupled in the processing sequence as shown in Fig. 21 (A). An arbitrary number of these commands (or command groups) 250 are combined to form a processing unit 251 which executes a predetermined process, that is, carries out a certain behavior.

Accordingly, the execution process data 214 shown in Fig. 21 (A) may be regarded as a series of processing units 251 which make certain behaviors and are coupled in the processing sequence as shown in Fig. 21 (B). The serialized execution process data 214 shown in Fig. 21 (B) as a whole carries out a specific operation. Hence, an execution process data 214 for carrying out another process is given as a different execution process data in which the processing units 251 are coupled in a different combination.

As the existing processing units 251 carrying out different behaviors considerably increases in number, the individual processing units 251 are integrated under a predetermined method "M" as shown in Fig. 21 (C) depending on the needs. In this case, it is also possible to carry out the same operation as the execution process data 214 shown in Fig. 21 (B)

It may be considered that the integration of the processing units 251 shown in Fig. 21 (C) corresponds to the forming of the capsule described above with reference to Fig. 7.

The data described with reference to Figs. 6 through 11 corresponds to the object part 206, and the data identification information iD corresponds to the object command 201.

The present invention is not limited to the specifically disclosed embodiments, and variations and modifications may be made without departing from the scope of the present invention.

## Claims

1. A communications system comprising:
a network (103); and
terminal stations (101, 102) connected to the network, each of the terminal stations having a data processing function and a communications function,
characterized in that said network comprises:
a first line (151) via which messages for controlling a communication between the terminal stations are transferred;
a second line (152) via which inquiry information is broadcasted from a first one of the terminal stations which does not have desired data, said inquiry information asking the terminal stations other than the first one of the terminal stations whether or not the terminal stations other than the first one of the terminal stations have the desired data; and
a third line (153) via which the desired data is transferred from a second one of the terminal stations which has the desired data to the first one of the terminal stations which needs the desired data, said third line having a bit rate higher than that of the first line,
said first, second and third lines forming a three-hierarchical layer communications medium.

2. The communications system as claimed in claim 1, characterized in that the first, second and third lines correspond to a B channel, a D channel and an H channel of a broadband integrated services digital network.

3. The communications system as claimed in claim 1, characterized in that the desired data is transferred via the third line together with first identification information (iD) indicating the first one of the terminal stations which needs the desired data, and second identification information (iD) indicating the second one of the terminal stations which has the desired information.

4. The communications system as claimed in claim 1, characterized in that in a case where the first one of the terminal stations which needs the desired data knows that the second one of the stations has the desired data, the first one of the terminal stations communicates with the second one of the terminal stations via the first line (151) without the inquiry information transferred via the second line (152), and the desired data is transferred from the second one of the terminal stations to the first one of the terminal stations via the third line (153).
